# EUROPEAN PATENT APPLICATION

(11) **EP 4 380 271 A1**
(43) Date of publication of application: **05.06.2024**
(21) Application number: 21951386.8
(22) Date of filing: 30.07.2021
(51) Int. Cl.: H04W 72/04

(54) **HYBRID AUTOMATIC REPEAT REQUEST FEEDBACK METHOD AND DEVICE**

(71) Applicant: Beijing Xiaomi Mobile Software Co., Ltd., Beijing 100085 (CN)
(72) Inventor: LIU, Yang, Beijing 100085 (CN)
(74) Representative: Hughes, Andrea Michelle
(86) International application number: PCT/CN2021/109822
(87) International publication number: WO 2023/004796

(57) **Abstract**

A hybrid automatic repeat request feedback method and device, applied to a mobile communication technology. The method comprises: in the case that an HARQ-ACK needs to be transmitted, determining an initial slot where HARQ-ACK transmission is located, and in the case that a PUCCH resource on the initial slot is determined to be invalid, determining a latest delay feedback slot supported by the HARQ-ACK, and sending the HARQ-ACK by means of a valid PUCCH on any slot between the initial slot and the latest delay feedback slot or the latest delay feedback slot. In this case, the delayed transmission of the HARQ-ACK is supported, such that the transmission delay and transmission validity of ultra-reliable and low-latency communication (URLLC) are ensured.

## Description

### TECHNICAL FIELD

The present disclosure relates to the field of communication technologies, in particularly, to a method and an apparatus for hybrid automatic repeat request feedback.

### BACKGROUND

At present, in a fifth generation mobile networks (5G) new radio (NR) system, a terminal device can transmit hybrid automatic repeat request (HARQ-ACK) information of a semi-persistent scheduling (SPS) physical downlink shared channel (PDSCH) to a base station through a physical uplink control channel (PUCCH).

In NR Rel-17, a HARQ-ACK feedback delay transmission mechanism is introduced. When indicating that a PUCCH resource on an initial slot K1 carrying HARQ-ACK is invalid, backward search for subsequent available PUCCH resources for HARQ-ACK transmission in SPS PDSCH may be delayed. However, if the terminal device delays for a long time after the initial slot before transmitting the HARQ-ACK to the base station, this method of transmitting the HARQ-ACK cannot meet requirements for transmission latency and transmission effectiveness of ultra reliable and low latency communication (URLLC).

### SUMMARY

Embodiments of the present disclosure provide a method and an apparatus for hybrid automatic repeat request feedback, capable of applying to a scenario of communication between a terminal device and a network device in cellular mobile communication technology, causing the terminal device to send HARQ-ACK based on a valid PUCCH resource on a slot no later than a last delay feedback slot, ensuring transmission latency and transmission effectiveness of ultra reliable and low latency communication (URLLC).

In a first aspect of an embodiment of the present disclosure, a method for hybrid automatic repeat request feedback is provided. The method is performed by a terminal device. The method includes: determining an initial slot where a hybrid automatic repeat request acknowledgement (HARQ-ACK) transmission is located; determining a last delay feedback slot for the HARQ-ACK in a case of determining that a first physical uplink control channel (PUCCH) resource on the initial slot is invalid; and sending the HARQ-ACK by determining a valid second PUCCH resource, in which a slot where the second PUCCH resource is located is a slot after the initial slot and no later than the last delay feedback slot.

In the technical solution, when it is required to transmit the HARQ-ACK, the initial slot where the HARQ-ACK transmission is located is determined. The last delay feedback slot for the HARQ-ACK is determined in a case of determining that the PUCCH resource on the initial slot is invalid. The HARQ-ACK is sent through the valid PUCCH resource on any slot between the initial slot and the last delay feedback slot or on the last delay feedback slot. Therefore, the method may ensure the transmission latency and the transmission effectiveness of the ultra reliable and low latency communication (URLLC) while supporting delayed feedback of the HARQ-ACK.

In a possible implementation, determining the last delay feedback slot for the HARQ-ACK includes at least one of: determining the last delay feedback slot for the HARQ-ACK based on a protocol agreement; determining more than one candidate last delay feedback slot for the HARQ-ACK based on a protocol agreement, and determine the last delay feedback slot from the more than one candidate last delay feedback slot; extending a time-domain resource allocation (TDRA) table based on a protocol agreement, and determining the last delay feedback slot from the TDRA table; or acquiring a last delay feedback slot corresponding to the first PUCCH resource based on a protocol agreement.

In a possible implementation, determining the last delay feedback slot for the HARQ-ACK includes: determining a maximum delay feedback slot offset value for the HARQ-ACK; determining the last delay feedback slot for the HARQ-ACK based on the initial slot and the maximum delay feedback slot offset value.

In a possible implementation, determining the maximum delay feedback slot offset value for the HARQ-ACK includes at least one of: determining the maximum delay feedback slot offset value for the HARQ-ACK based on a protocol agreement; determining more than one candidate maximum delay feedback slot offset value for the HARQ-ACK based on a protocol agreement, and determining the maximum delay feedback slot offset value from the more than one candidate maximum delay feedback slot offset value; expanding a time-domain resource allocation (TDRA) table based on a protocol agreement, and acquiring a corresponding slot offset value from the TDRA table, and determining the slot offset value as the maximum delay feedback slot offset value; or acquiring a slot offset value corresponding to the first PUCCH resource based on a protocol agreement, and determining the slot offset value as the maximum delay feedback slot offset value.

In a possible implementation, determining the maximum delay feedback slot offset value for the HARQ-ACK includes: acquiring a maximum K1 value among more than one initial slot K1 configured for the HARQ-ACK; and determining the maximum delay feedback slot offset value based on the maximum K1 value.

In a possible implementation, determining the maximum delay feedback slot offset value based on the maximum K1 value includes: determining the maximum K1 value as the maximum delay feedback slot offset value; or performing an operation on the maximum K1 value according to a preset operation rule, and determining a value obtained from the operation as the maximum delay feedback slot offset value.

In a possible implementation, determining the maximum delay feedback slot offset value for the HARQ-ACK includes: determining a maximum number of delayable times for the initial slot; and determining the maximum delay feedback slot offset value based on the maximum number of delayable times.

In a possible implementation, determining the maximum delay feedback slot offset value for the HARQ-ACK includes: determining the maximum delay feedback slot offset value for the HARQ-ACK based on a transmission cycle of a semi-persistent scheduling (SPS) physical downlink shared channel (PDSCH); or determining the maximum delay feedback slot offset value for the HARQ-ACK based on a grouping binding size or a time window length of the SPS PDSCH.

In a possible implementation, determining the maximum delay feedback slot offset value for the HARQ-ACK includes: receiving a first configuration instruction sent by a network device, wherein the first configuration instruction is configured to indicate the maximum delay feedback slot offset value; or receiving a second configuration instruction sent by a network device, and receiving an indication instruction sent by the network device, determining, based on the indication instruction, one slot offset value among more than one candidate maximum delay feedback slot offset value indicated by the second configuration instruction, and determining the determined slot offset value as the maximum delay feedback slot offset value.

In a possible implementation, the first configuration instruction includes a first indication field for indicating the maximum delay feedback slot offset value; or, the second configuration instruction comprises a second indication field for indicating the more than one candidate maximum delay feedback slot offset value, and the indication instruction comprises a third indication field for indicating one slot offset value among the more than one candidate maximum delay feedback slot offset value being as the maximum delay feedback slot offset value.

In a second aspect of an embodiment of the present disclosure, a method for hybrid automatic repeat request feedback is provided. The method is performed by a network device. The method includes: receiving a hybrid automatic repeat request acknowledgement (HARQ-ACK) sent by a terminal device on a valid physical uplink control channel (PUCCH) resource, in which a slot where the PUCCH resource is located is a slot after an initial slot where the HARQ-ACK is located and no later than a last delay feedback slot.

In the technical solution, the HARQ-ACK sent by the terminal device through the valid PUCCH resource on the slot no later than the last delay feedback slot is received. Therefore, the method supports the delayed transmission of the HARQ-ACK, ensuring the transmission latency and the transmission effectiveness of the ultra reliable and low latency communication (URLLC).

In a possible implementation, the last delay feedback slot is determined based on the initial slot and the maximum delay feedback slot offset value for the HARQ-ACK.

In a possible implementation, the method further includes: sending a first configuration instruction to the terminal device, in which, the first configuration instruction is configured to indicate the maximum delay feedback slot offset value; or sending a second configuration instruction to the terminal device, and sending an indication instruction to the terminal device, in which the second configuration instruction comprises more than one candidate maximum delay feedback slot offset value, the indication instruction is configured to indicate one slot offset value among the more than one candidate maximum delay feedback slot offset value.

In a possible implementation, the first configuration instruction includes a first indication field for indicating the maximum delay feedback slot offset value; or, the second configuration instruction includes a second indication field for indicating the more than one candidate maximum delay feedback slot offset value, and the indication instruction includes a third indication field for indicating one slot offset value among the more than one candidate maximum delay feedback slot offset value being as the maximum delay feedback slot offset value.

In a third aspect of an embodiment of the present disclosure, an apparatus for hybrid automatic repeat request (HARQ) feedback is provided. The apparatus has part or all of functions of the terminal device for implementing the method as described in the first aspect. For example, functions of the apparatus may have functions of implementing part or all of embodiments of the present disclosure, or may have functions of implementing any one of embodiments of the present disclosure independently. The functions may be implemented through hardware or by executing corresponding software through hardware. The hardware or software includes one or more units or modules corresponding to the above functions.

In a fourth aspect of an embodiment of the present disclosure, an apparatus for hybrid automatic repeat request (HARQ) feedback is provided. The apparatus has part or all of functions of the network device for implementing the method as described in the second aspect. For example, functions of the apparatus may have functions of implementing part or all of embodiments of the present disclosure, or may have functions of implementing any one of embodiments of the present disclosure independently. The functions may be implemented through hardware or by executing corresponding software through hardware. The hardware or software includes one or more units or modules corresponding to the above functions.

In a fifth aspect of an embodiment of the present disclosure, an apparatus for hybrid automatic repeat request (HARQ) feedback is provided. The apparatus includes a processor. The processor is configured to execute the method as described in the first aspect when invoking a computer program in memory.

In a sixth aspect of an embodiment of the present disclosure, an apparatus for hybrid automatic repeat request (HARQ) feedback is provided. The apparatus includes a processor. The processor is configured to execute the method as described in the second aspect when invoking a computer program in memory.

In a seventh aspect of an embodiment of the present disclosure, an apparatus for hybrid automatic repeat request (HARQ) feedback is provided. The apparatus includes a processor and a memory having a computer program stored thereon. When the computer program is executed by the processor, the method as described in the first aspect is implemented.

In an eighth aspect of an embodiment of the present disclosure, an apparatus for hybrid automatic repeat request (HARQ) feedback is provided. The apparatus includes a processor and a memory having a computer program stored thereon. When the computer program is executed by the processor, the method as described in the second aspect is implemented.

In a ninth aspect of an embodiment of the present disclosure, an apparatus for hybrid automatic repeat request (HARQ) feedback is provided. The apparatus includes a processor and an interface circuit. The interface circuit is configured to receive code instructions and transmit the code instructions to the processor. The processor is configured to run the code instructions to enable the apparatus to execute the method as described in the first aspect.

In a tenth aspect of an embodiment of the present disclosure, an apparatus for hybrid automatic repeat request (HARQ) feedback is provided. The apparatus includes a processor and an interface circuit. The interface circuit is configured to receive code instructions and transmit the code instructions to the processor. The processor is configured to run the code instructions to enable the apparatus to execute the method as described in the second aspect.

In an eleventh aspect of an embodiment of the present disclosure, a communication system is provided. The system includes the apparatus for hybrid automatic repeat request (HARQ) feedback as described in the third aspect and the apparatus for hybrid automatic repeat request (HARQ) feedback as described in the fourth aspect, or the system includes the apparatus for hybrid automatic repeat request (HARQ) feedback as described in the fifth aspect and the apparatus for hybrid automatic repeat request (HARQ) feedback as described in the sixth aspect, or the system includes the apparatus for hybrid automatic repeat request (HARQ) feedback as described in the seventh aspect and the apparatus for hybrid automatic repeat request (HARQ) feedback as described in the eighth aspect, or, the system includes the apparatus for hybrid automatic repeat request (HARQ) feedback as described in the ninth aspect and the apparatus for hybrid automatic repeat request (HARQ) feedback as described in the tenth aspect.

In a twelfth aspect of an embodiment of the present disclosure, a computer-readable storage medium is provided. The storage medium is configured to store instructions performed by the terminal device as described above. The terminal device is caused to implement the method as described in the first aspect when the instructions are executed.

In a thirteenth aspect of an embodiment of the present disclosure, a computer-readable storage medium is provided. The storage medium is configured to store instructions performed by the network device as described above. The terminal device is caused to implement the method as described in the second aspect when the instructions are executed.

In a fourteenth aspect of an embodiment of the present disclosure, a computer program product including a computer program is provided. When the computer program is run on a computer, the computer is caused to implement the method as described in the first aspect.

In a fifteenth aspect of an embodiment of the present disclosure, a computer program product including a computer program is provided. When the computer program is run on a computer, the computer is caused to implement the method as described in the second aspect.

In a sixteenth aspect of an embodiment of the present disclosure, a chip system is provided. The chip system includes at least one processor and an interface, and is configured to support a network device to implement functions related to the first aspect, such as determining or processing at least one of data and information related to the above method. In a possible design, the chip system further includes a memory, configured to store a computer program and data necessary for the network device. The chip system may be composed of chips or include a chip and other discrete devices.

In a seventeenth aspect of an embodiment of the present disclosure, an embodiment of the present disclosure provides a chip system. The chip system includes at least one processor and an interface, and is configured to support a terminal device to implement functions related to the second aspect, such as determining or processing at least one of data and information related to the above method. In a possible design, the chip system further includes a memory, configured to store a computer program and data necessary for the terminal device. The chip system may be composed of chips or include a chip and other discrete devices.

In an eighteenth aspect of an embodiment of the present disclosure, a computer program is provided. When the computer program is run on a computer, the computer is caused to implement the method as described in the first aspect.

In a nineteenth aspect of an embodiment of the present disclosure, a computer program is provided. When the computer program is run on a computer, the computer is caused to implement the method as described in the second aspect.

### BRIEF DESCRIPTION OF THE DRAWINGS

In order to explain the technical solutions in embodiments of the present disclosure or the background, the accompanying drawings required in embodiments of the present disclosure, or the background will be explained below.
FIG. 1 is a schematic diagram illustrating an architecture of a communication system provided in an embodiment of the present disclosure.
FIG. 2a is a flowchart illustrating a method for hybrid automatic repeat request (HARQ) feedback according to an embodiment of the present disclosure.
FIG. 2b is a flowchart illustrating another method for hybrid automatic repeat request (HARQ) feedback according to an embodiment of the present disclosure.
FIG. 3 is a flowchart illustrating another method for hybrid automatic repeat request (HARQ) feedback according to an embodiment of the present disclosure.
FIG. 4 is a flowchart illustrating another method for hybrid automatic repeat request (HARQ) feedback according to an embodiment of the present disclosure.
FIG. 5 is a flowchart illustrating another method for hybrid automatic repeat request (HARQ) feedback according to an embodiment of the present disclosure.
FIG. 6 is a flowchart illustrating another method for hybrid automatic repeat request (HARQ) feedback according to an embodiment of the present disclosure.
FIG. 7 is a flowchart illustrating another method for hybrid automatic repeat request (HARQ) feedback according to an embodiment of the present disclosure.
FIG. 8 is a flowchart illustrating another method for hybrid automatic repeat request (HARQ) feedback according to an embodiment of the present disclosure.
FIG. 9 is a flowchart illustrating another method for hybrid automatic repeat request (HARQ) feedback according to an embodiment of the present disclosure.
FIG. 10 is a flowchart illustrating another method for hybrid automatic repeat request (HARQ) feedback according to an embodiment of the present disclosure.
FIG. 11 is a flowchart illustrating another method for hybrid automatic repeat request (HARQ) feedback according to an embodiment of the present disclosure.
FIG. 12 is a flowchart illustrating another method for hybrid automatic repeat request (HARQ) feedback according to an embodiment of the present disclosure.
FIG. 13 is a flowchart illustrating another method for hybrid automatic repeat request (HARQ) feedback according to an embodiment of the present disclosure.
FIG. 14 is a block diagram illustrating an apparatus for hybrid automatic repeat request (HARQ) feedback according to an embodiment of the present disclosure.
FIG. 15 is a block diagram illustrating another apparatus for hybrid automatic repeat request (HARQ) feedback according to an embodiment of the present disclosure.
FIG. 16 is a block diagram illustrating a chip according to an embodiment of the present disclosure.

### DETAILED DESCRIPTION

In order to better understand a method for time domain resource assignment proposed in an embodiment of the present disclosure, a communication system used in an embodiment of the present disclosure will be described below.

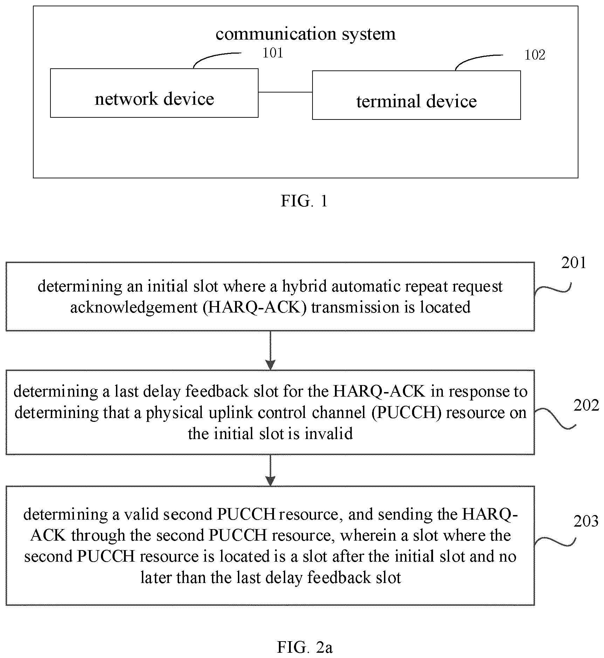

Please referring to FIG. 1, FIG. 1 is a schematic diagram illustrating an architecture of a communication system provided in an embodiment of the present disclosure. The communication system may include, but is not limited to, one network device and one terminal device. Numbers and forms of the devices as illustrated in FIG. 1 are for example only and do not constitute a limitation to embodiments of the present disclosure. In practical applications, the system may include two or more network devices or two or more terminal devices. The communication system as illustrated in FIG. 1 takes including one network device 101 and one terminal device 102 as an example.

It should be noted that the technical solution of embodiments of the present disclosure may be applied to various communication systems, for example, a long-term evolution (LTE) system, a 5th generation (5G) mobile communication system, a 5G new radio (NR) system, or other future new mobile communication systems.

The network device 101 in embodiments of the present disclosure is a physical device for transmitting or receiving signals at a network side. For example, the network device 101 may be an evolved NodeB (eNB), a transmission reception point (TRP), a next generation NodeB (gNB) in an NR system, base stations in other future mobile communication systems, or access nodes in wireless fidelity (WiFi) systems. A specific technology and a specific device form adopted by the network device are not limited in embodiments of the present disclosure. The network device 11 provided in embodiments of the present disclosure may be composed of a central unit (CU) and a distributed unit (DU). The CU may also be referred to as a control unit. A CU-DU structure may be adopted to separate protocol layers of the network device, such as a base station. Functions of some protocol layers may be controlled centrally by the CU, and functions of the remaining or all protocol layers may be distributed within the DU which is centrally controlled by the CU.

The terminal device 102 in embodiments of the present disclosure is physical device for receiving or transmitting signals at a user side, such as a mobile phone. The terminal device may also be referred to as a terminal, a user equipment (UE), a mobile station (MS), a mobile terminal (MT), etc. The terminal device may be a vehicle with a communication feature, a smart vehicle, a mobile phone, a wearable device, a pad, a computer with a wireless transceiver feature, a virtual reality (VR) terminal, an augmented reality (AR) terminal, a wireless terminal in industrial control, and a wireless terminal in self-driving, a wireless terminal in remote medical surgery, a wireless terminal in smart grid, a wireless terminal in transportation safety, a wireless terminal in smart city, and a wireless terminal in smart home, etc. A specific technology and a specific device form adopted by the terminal device are not limited in embodiments of the present disclosure.

In the communication system, if a terminal device delays for a long time after an initial slot before transmitting a HARQ-ACK to a base station, this method of transmitting the HARQ-ACK cannot meet requirements for transmission latency and transmission effectiveness of URLLC. Therefore, how to enable the terminal device to meet the requirements for the transmission latency and the transmission effectiveness of the URLLC while supporting delayed feedback of the HARQ-ACK is an urgent technical problem to be solved.

In the technical solution, when it is required to transmit HARQ-ACK, an initial slot where HARQ-ACK transmission is located is determined. A last delay feedback slot for the HARQ-ACK is determined in a case of determining that a PUCCH resource on the initial slot is invalid. The HARQ-ACK is sent through a valid PUCCH resource on any slot between the initial slot and the last delay feedback slot or on the last delay feedback slot. Therefore, the method may ensure the transmission latency and the transmission effectiveness of the ultra reliable and low latency communication (URLLC) while supporting delayed feedback of the HARQ-ACK.

It can be understood that the communication system described in embodiments of the present disclosure is intended to provide a clearer explanation of the technical solution of embodiments of the present disclosure, and does not constitute a limitation on the technical solution proposed in embodiments of the present disclosure. As those ordinary skilled in the art known, with evolution of the system architecture and emergence of new business scenarios, the technical solution proposed in embodiments of the present disclosure is also applicable to the similar technical problem.

A method and an apparatus for hybrid automatic repeat request feedback provided in the present disclosure are described in detail with reference to the accompany drawings below.

FIG. 2a is a flowchart illustrating a method for hybrid automatic repeat request feedback according to an embodiment of the present disclosure. The method may be performed by a terminal device in the communication system as illustrated in FIG. 1.

As illustrated in FIG. 2a, the method may include, but is not limited to, following steps.

At step 201, an initial slot where a HARQ-ACK transmission is located is determined.

In some embodiments, the initial slot where the HARQ-ACK transmission is located may be determined based on an activation instruction sent by a network device. Taking the HARQ-ACK as an example for a HARQ-ACK for a SPS PDSCH, the initial slot where the HARQ-ACK transmission for the SPS PDSCH is located may be determined based on an activation instruction of the SPS PDSCH sent by the network device.

The activation instruction may be a downlink control information (DCI) signaling.

At step 202, a last delay feedback slot for the HARQ-ACK is determined in response to determining that a first PUCCH resource on the initial slot is invalid.

In some embodiments, a symbol set corresponding to a first PUCCH resource on the initial slot may be acquired. In a case of determining that the symbol set includes an invalid symbol, it may be determined that the first PUCCH resource on the initial slot is invalid.

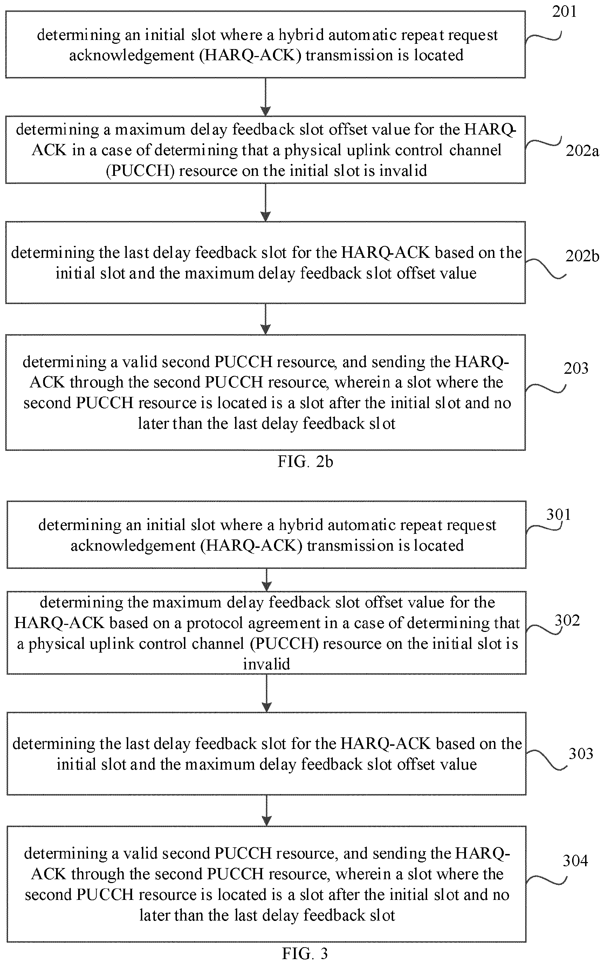

In an embodiment of the present disclosure, as illustrated in FIG. 2b, the last delay feedback slot for HARQ-ACK transmission may be determined by means of following methods.

At step 202a, a maximum delay feedback slot offset value for the HARQ-ACK is determined in a case of determining that the first PUCCH resource on the initial slot is invalid.

At step 202b, the last delay feedback slot for the HARQ-ACK is determined based on the initial slot and the maximum delay feedback slot offset value. In some possible implementations, the last delay feedback slot that can be applicable for the HARQ-ACK transmission in an embodiment of the present disclosure may be determined based on a communication protocol (such as a TDRA table, more than one candidate position that can be applicable for the HARQ-ACK transmission, or a maximum K1 value among more than one initial slots K1), may be also determined based on other parameters (such as a maximum number of delayable times for the initial slot, a transmission cycle of a semi-persistent scheduling (SPS) physical downlink shared channel (PDSCH), a grouping binding size or a time window length of the SPS PDSCH), may be also determined based on configuration at a network side. In the following embodiments, taking determining the last delay feedback slot for the HARQ-ACK based on the maximum delay feedback slot offset value as an example for explanation, and examples are provided on how to determine the last delay feedback slot for the HARQ-ACK through the communication protocol, other parameters, and other methods. Of course, if the last delay feedback slot for the HARQ-ACK is determined by means of other methods, the methods may be also applied to these examples performed through the communication protocol, other parameters, and the configuration at the network side, and only minor modifications need to be made to different methods of determining the last delay feedback slot for the HARQ-ACK.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 203, a valid second PUCCH resource is determined, and the above HARQ-ACK is sent through the second PUCCH resource. A slot where the second PUCCH resource is located is a slot after the initial slot and no later than the last delay feedback slot.

In an embodiment of the present disclosure, the valid second PUCCH resource can be searched and determined sequentially from the initial slot onwards. Of course, this is only an example for explanation, the valid second PUCCH resource can be determined in any method, which will not be limited in embodiments of the present disclosure.

In embodiments of the present disclosure, when it is required to transmit the HARQ-ACK, the initial slot where the HARQ-ACK transmission is located is determined. The last delay feedback slot for the HARQ-ACK is determined in a case of determining that the PUCCH resource on the initial slot is invalid. The HARQ-ACK is sent through the valid PUCCH resource on any slot between the initial slot and the last delay feedback slot or on the last delay feedback slot. Therefore, the method may ensure the transmission latency and the transmission effectiveness of the ultra reliable and low latency communication (URLLC) while supporting delayed feedback of the HARQ-ACK.

Please referring to FIG. 3, FIG. 3 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 3, the method may include, but is not limited to, following steps.

At step 301, an initial slot where a HARQ-ACK transmission is located is determined.

In embodiments of the present disclosure, the step 301 may be implemented by using any one method in respective embodiments of the present disclosure. Embodiments of the present disclosure make no limitation on this and will not repeat it.

At step 302, a maximum delay feedback slot offset value for the HARQ-ACK is determined based on a protocol agreement in a case of determining that a first PUCCH resource on the initial slot is invalid.

In some embodiments, in a case of determining that the first PUCCH resource on the initial slot is invalid, the maximum delay feedback slot offset value for the HARQ-ACK may be pre-agreed between the network device and the terminal device, causing the terminal device to determine the maximum delay feedback slot offset value for the HARQ-ACK based on the protocol agreement in a case that it is required to obtain the maximum delay feedback slot offset value for the HARQ-ACK.

As an example, the protocol may agree that the maximum delay feedback slot offset value is a fixed value, such as 8. It should be noted that the above is only an illustrative explanation, and the maximum delay feedback slot offset value may also be agreed upon as other values. Embodiments of the present disclosure make no limitation on this value.

At step 303, the last delay feedback slot for the above HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 304, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is required to delay transmission of the HARQ-ACK, the maximum delay feedback slot offset value for the HARQ-ACK is determined based on the protocol agreement, and the last delay feedback slot for the HARQ-ACK is determined based on the initial slot and the maximum delay feedback slot offset value, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

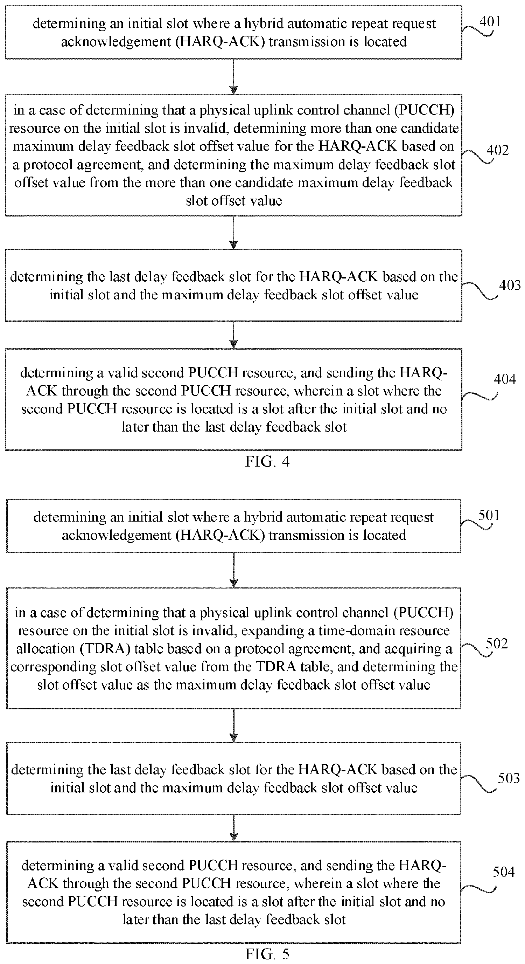

Please referring to FIG. 4, FIG. 4 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 4, the method may include, but is not limited to, following steps.

At step 401, an initial slot where a HARQ-ACK transmission is located is determined.

In embodiments of the present disclosure, the step 401 may be implemented by using any one method in respective embodiments of the present disclosure. Embodiments of the present disclosure make no limitation on this and will not repeat it.

At step 402, in a case of determining that a first PUCCH resource on the initial slot is invalid, more than one candidate maximum delay feedback slot offset value for the HARQ-ACK is determined based on a protocol agreement, and the maximum delay feedback slot offset value is determined from the more than one candidate maximum delay feedback slot offset value.

In some embodiments, in a case of determining that the first PUCCH resource on the initial slot is invalid, the more than one candidate maximum delay feedback slot offset value for the HARQ-ACK may be pre-agreed between the network device and the terminal device through a protocol, causing the terminal device to determine the more than one candidate maximum delay feedback slot offset value for the HARQ-ACK based on the protocol agreement.

In some embodiments, a possible implementation of determining the maximum delay feedback slot offset value from the more than one candidate maximum delay feedback slot offset value may include: receiving an indication instruction sent by the network device, in which the indication instruction is configured to select and indicate one slot offset value among the more than one candidate maximum delay feedback slot offset value; and determining the maximum delay feedback slot offset value from the more than one candidate maximum delay feedback slot offset value based on the indication instruction. For example, the slot offset value indicated by the indication instruction may be determined as the maximum delay feedback slot offset value.

As an example, the more than one candidate maximum delay feedback slot offset value may be {0, 8, 16, 24, ...}. Assumed that the slot offset value indicated by the indication instruction may be 8, it may be determined that the maximum delay feedback slot offset value may be 8.

At step 403, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 404, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is required to delay transmission of the HARQ-ACK, the maximum delay feedback slot offset value for the HARQ-ACK is determined based on the protocol agreement, the more than one candidate maximum delay feedback slot offset value for the HARQ-ACK is determined based on a protocol agreement, and the maximum delay feedback slot offset value is determined from the more than one candidate maximum delay feedback slot offset value. The last delay feedback slot for the HARQ-ACK is determined based on the initial slot and the maximum delay feedback slot offset value, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

Please referring to FIG. 5, FIG. 5 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 5, the method may include, but is not limited to, following steps.

At step 501, an initial slot where a HARQ-ACK transmission is located is determined.

In embodiments of the present disclosure, the step 501 may be implemented by using any one method in respective embodiments of the present disclosure. Embodiments of the present disclosure make no limitation on this and will not repeat it.

At step 502, in a case of determining that a first PUCCH resource on the initial slot is invalid, a time-domain resource allocation (TDRA) table is expanded based on a protocol agreement, and a corresponding slot offset value is acquired from the TDRA table, and the slot offset value is determined as the maximum delay feedback slot offset value.

In some embodiments, in a case of determining that the first PUCCH resource on the initial slot is invalid, a protocol may be pre-agreed between the network device and the terminal device, the time-domain resource allocation (TDRA) table is agreed in the protocol agreement. Each row of the TDRA table is bound with some slot offset values, causing the terminal device to determine a row index of the TDRA table based on the protocol agreement, and obtain a slot offset value bound to the row index in the TDRA table, and determine the obtained slot offset value as the maximum delay feedback slot offset value for the HARQ-ACK.

For example, each row in the TDRA table has one or more slot offset values, and row indexes of the TDRA table can be indicated by the protocol. Therefore, the slot offset value bound to the row index in the TDRA table can be obtained as the maximum delay feedback slot offset value.

At step 503, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 504, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is required to delay transmission of the HARQ-ACK, the time-domain resource allocation (TDRA) table is expanded based on the protocol agreement, and the corresponding slot offset value is acquired from the TDRA table, and the slot offset value is determined as the maximum delay feedback slot offset value. The last delay feedback slot for the HARQ-ACK is determined based on the maximum delay feedback slot offset value and the initial slot for the HARQ-ACK, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

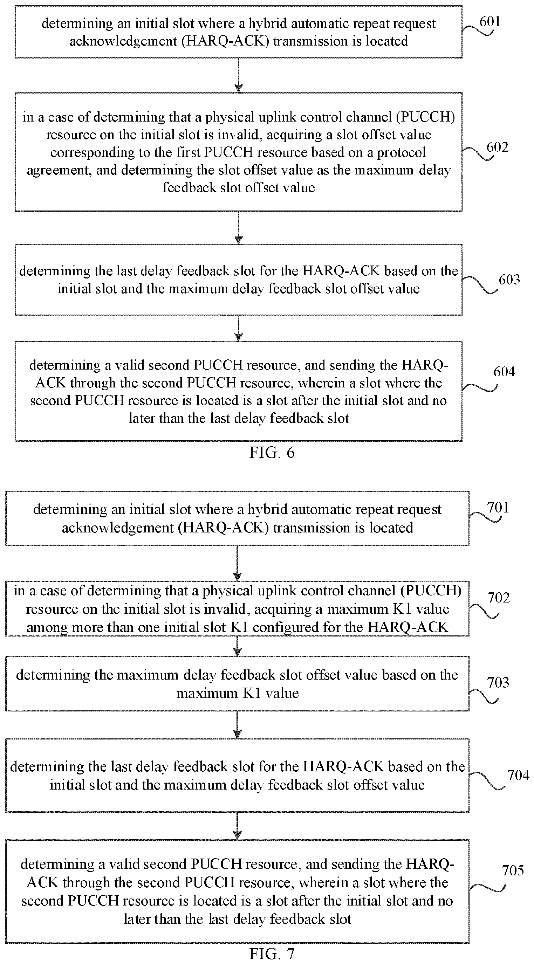

Please referring to FIG. 6, FIG. 6 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 6, the method may include, but is not limited to, following steps.

At step 601, an initial slot where a HARQ-ACK transmission is located is determined.

In embodiments of the present disclosure, the step 601 may be implemented by using any one method in respective embodiments of the present disclosure. Embodiments of the present disclosure make no limitation on this and will not repeat it.

At step 602, in a case of determining that a first PUCCH resource on the initial slot is invalid, a slot offset value corresponding to the first PUCCH resource is acquired based on a protocol agreement, and the slot offset value is determined as the maximum delay feedback slot offset value.

In some embodiments, in a case of determining that the first PUCCH resource on the initial slot is invalid, a protocol may be pre-agreed between the network device and the terminal device, the slot offset value bound to the PUCCH resource is agreed in the protocol agreement, causing the terminal device to acquire the slot offset value bound to the first PUCCH resource based on the protocol agreement, and determine the acquired slot offset value as the maximum delay feedback slot offset value.

At step 603, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 604, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is required to delay transmission of the HARQ-ACK, the slot offset value corresponding to the first PUCCH resource is acquired based on the protocol agreement, and the slot offset value is determined as the maximum delay feedback slot offset value. The last delay feedback slot for the HARQ-ACK is determined based on the maximum delay feedback slot offset value and the initial slot for the HARQ-ACK, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

Please referring to FIG. 7, FIG. 7 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 7, the method may include, but is not limited to, following steps.

At step 701, an initial slot where a HARQ-ACK transmission is located is determined.

In embodiments of the present disclosure, the step 701 may be implemented by using any one method in respective embodiments of the present disclosure. Embodiments of the present disclosure make no limitation on this and will not repeat it.

At step 702, in a case of determining that a first PUCCH resource on the initial slot is invalid, a maximum K1 value among more than one initial slot K1 configured for the HARQ-ACK by a network device is acquired.

At step 703, the maximum delay feedback slot offset value is determined based on the maximum K1 value.

In some embodiments, in a case of determining that the first PUCCH resource on the initial slot is invalid, the maximum delay feedback slot offset value may be determined based on a fixed rule. For example, the maximum K1 value among the more than one initial slot K1 configured for the HARQ-ACK by the network device is acquired, and the maximum K1 value may be determined as the maximum delay feedback slot offset value.

**In** some other embodiments, an operation may be performed on the maximum K1 value according to a preset operation rule, and a value obtained from the operation is determined as the maximum delay feedback slot offset value.

In some embodiments, the preset operation rule mentioned above may be: adding the maximum K1 value to a specified slot interval value. For example, the specified slot interval value is 2, assumed that the maximum K1 value is 16, a slot value 18 obtained by adding the maximum K1 value to the specified slot interval value can be used as the maximum delay feedback slot offset value for the HARQ-ACK.

In other embodiments, the preset operation rule mentioned above may be multiplying the maximum K1 value by a specified multiple. For example, the specified multiple is 2 and assumed that the maximum K1 value is 16, the maximum K1 value is multiplied by the specified multiple, and a value 32 obtained by multiplying is determined as the maximum delay feedback slot offset value for the HARQ-ACK.

At step 704, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 705, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is necessary to determine the maximum delay feedback slot offset value corresponding to HARQ-ACK, the maximum delay feedback slot offset value for the HARQ-ACK can be determined based on the maximum K1 value among the more than one initial time slot configured for the HARQ-ACK. Therefore, the network device does not need to indicate the maximum delay feedback slot offset value for the HARQ-ACK, and the terminal device can determine the maximum delay feedback slot offset value for the HARQ-ACK based on the fixed rule.

In embodiments of the present disclosure, when it is required to delay transmission of the HARQ-ACK, the maximum K1 value among more than one initial slot K1 configured for the HARQ-ACK is acquired, and the maximum delay feedback slot offset value is determined based on the maximum K1 value. The last delay feedback slot for the HARQ-ACK is determined based on the maximum delay feedback slot offset value and the initial slot for the HARQ-ACK, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

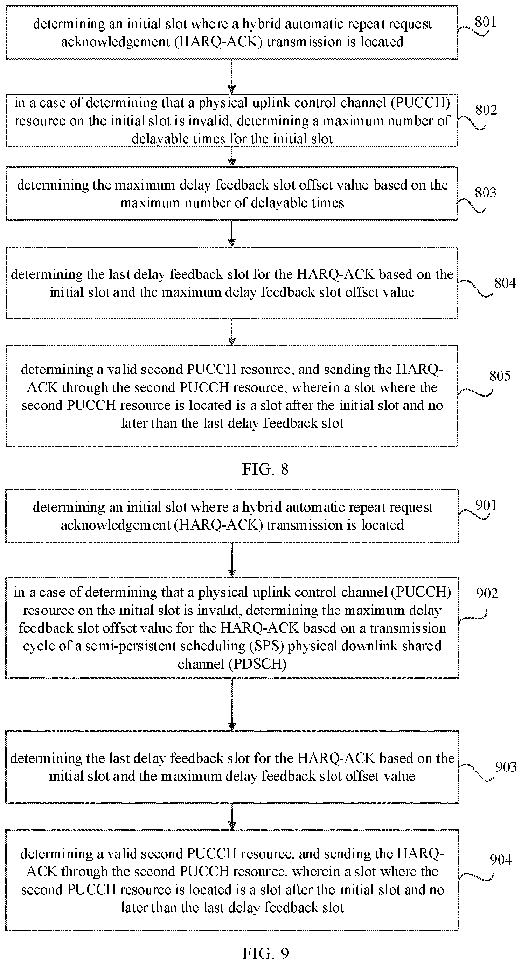

Please referring to FIG. 8, FIG. 8 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 8, the method may include, but is not limited to, following steps.

At step 801, an initial slot where a HARQ-ACK transmission is located is determined.

In embodiments of the present disclosure, the step 801 may be implemented by using any one method in respective embodiments of the present disclosure. Embodiments of the present disclosure make no limitation on this and will not repeat it.

At step 802, in a case of determining that a first PUCCH resource on the initial slot is invalid, a maximum number of delayable times for the initial slot is determined.

At step 803, the maximum delay feedback slot offset value is determined based on the maximum number of delayable times.

In some embodiments, in a case of determining that the first PUCCH resource on the initial slot is invalid, the maximum number of times that the initial slot can be delayed backwards can be defined, and the maximum delay feedback slot offset value can be determined based on the above maximum number of times that the initial slot can be delayed backwards. For example, the maximum number of times that can be delayed backwards mentioned above can be determined as the maximum delay feedback slot offset value. The maximum number of delayable times can refer to the maximum number of times that the initial time slot can be offset backwards, and a unit of each offset can be any one of symbol, slot, or subframe.

Step 804, the last delay feedback slot for the HARQ-ACK may be determined based on the initial slot, a semi-persistent configured time division duplexing (TDD) structure, and the maximum delay feedback slot offset value.

In some embodiments, the last delay feedback slot for the HARQ-ACK may be determined based on the initial slot, the semi-persistent TDD structure, and the maximum delay feedback slot offset value.

For example, the TDD structure is a DSUUUDDSUU structure, where D is a downlink slot, S is a special slot, and U is an uplink slot. Assuming that the maximum number M of delayable times for the initial slot is 3 times, the initial slot is a slot where a first uplink symbol is located, and attempting to delay the slot (i.e., an available slot) of the uplink symbol for 3 times until it reaches a slot where a fourth uplink symbol is located (i.e., skipping an unavailable slot after the initial slot), the last delay feedback slot for the HARQ-ACK may be determined based on a slot offset value between the slot where the fourth uplink symbol is located and the slot where the first uplink symbol is located.

At step 805, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is necessary to determine the maximum delay feedback slot offset value corresponding to HARQ-ACK, the maximum number of delayable times for the initial slot may be determined, and the maximum delay feedback slot offset value is determined based on the maximum number of delayable times for the initial slot. Therefore, even though the network device does not indicate the maximum delay feedback slot offset value for the HARQ-ACK, and the terminal device can determine the maximum delay feedback slot offset value for the HARQ-ACK based on a fixed rule.

In embodiments of the present disclosure, when it is required to delay transmission of the HARQ-ACK, the maximum number of delayable times for the initial slot may be determined, and the maximum delay feedback slot offset value is determined based on the maximum number of delayable times for the initial slot. The last delay feedback slot for the HARQ-ACK is determined based on the initial slot, the semi-persistent configured TDD structure and the maximum delay feedback slot offset value, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

Please referring to FIG. 9, FIG. 9 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 9, the method may include, but is not limited to, following steps.

At step 901, an initial slot where a HARQ-ACK transmission is located is determined.

In embodiments of the present disclosure, the step 901 may be implemented by using any one method in respective embodiments of the present disclosure. Embodiments of the present disclosure make no limitation on this and will not repeat it.

At step 902, in a case of determining that a first PUCCH resource on the initial slot is invalid, the maximum delay feedback slot offset value for the HARQ-ACK is determined based on a transmission cycle of a SPS PDSCH.

In some embodiments, the slot offset value corresponding to the transmission cycle of the SPS PDSCH may be acquired, and the acquired slot offset value may be determined as the maximum delay feedback slot offset value for the HARQ-ACK.

In other embodiments, a specified operation is performed on the transmission cycle of the SPS PDSCH and an obtained operation result may be determined as the maximum delay feedback slot offset value for the HARQ-ACK.

For example, the specified operation may be: adding the transmission cycle of the SPS PDSCH to a specified value.

For example, the specified operation may be: multiplying the transmission cycle of the SPS PDSCH by a specified value.

**Performing** the specified operation on the transmission cycle of the SPS PDSCH may be pre-agreed by the terminal device and the network device.

At step 903, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 904, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is necessary to determine the maximum delay feedback slot offset value corresponding to HARQ-ACK, the maximum delay feedback slot offset value for the HARQ-ACK is determined based on the transmission cycle of the SPS PDSCH. Therefore, even though the network device does not indicate the maximum delay feedback slot offset value for the HARQ-ACK, and the terminal device can determine the maximum delay feedback slot offset value for the HARQ-ACK based on a fixed rule.

In embodiments of the present disclosure, when it is required to delay transmission of the HARQ-ACK, the maximum delay feedback slot offset value for the HARQ-ACK is determined based on the transmission cycle of the SPS PDSCH. The last delay feedback slot for the HARQ-ACK is determined based on the maximum delay feedback slot offset value and the initial slot for the HARQ-ACK, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

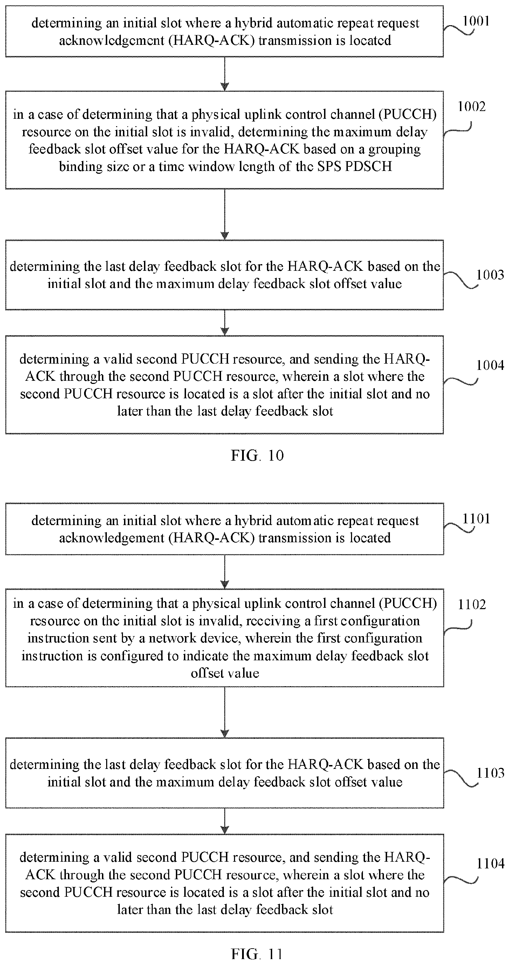

Please referring to FIG. 10, FIG. 10 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 10, the method may include, but is not limited to, following steps.

At step 1001, an initial slot where a HARQ-ACK transmission is located is determined.

In embodiments of the present disclosure, the step 1001 may be implemented by using any one method in respective embodiments of the present disclosure. Embodiments of the present disclosure make no limitation on this and will not repeat it.

At step 1002, in a case of determining that a first PUCCH resource on the initial slot is invalid, the maximum delay feedback slot offset value for the HARQ-ACK is determined based on a grouping binding size or a time window length of the SPS PDSCH.

In some embodiments, the slot offset value corresponding to the grouping binding size of the SPS PDSCH may be acquired, and the acquired slot offset value may be determined as the maximum delay feedback slot offset value for the HARQ-ACK.

In other embodiments, the slot offset value corresponding to the time window length of the SPS PDSCH may be acquired, and the acquired slot offset value may be determined as the maximum delay feedback slot offset value for the HARQ-ACK.

In other embodiments, a specified operation is performed on the grouping binding size of the SPS PDSCH and an obtained operation result may be determined as the maximum delay feedback slot offset value for the HARQ-ACK.

For example, the specified operation may be: adding the grouping binding size of the SPS PDSCH to a specified value.

For another example, the specified operation may be: multiplying the grouping binding size of the SPS PDSCH by a specified value.

In other embodiments, a specified operation is performed on the time window length of the SPS PDSCH and an obtained operation result may be determined as the maximum delay feedback slot offset value for the HARQ-ACK.

For example, the specified operation may be: adding the time window length of the SPS PDSCH to a specified value.

For another example, the specified operation may be: multiplying the time window length of the SPS PDSCH by a specified value.

Performing the specified operation on the time window length of the SPS PDSCH may be pre-agreed by the terminal device and the network device.

At step 1003, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 1004, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is necessary to determine the maximum delay feedback slot offset value corresponding to HARQ-ACK, the maximum delay feedback slot offset value for the HARQ-ACK is determined based on the grouping binding size or the time window length of the SPS PDSCH. Therefore, even though the network device does not indicate the maximum delay feedback slot offset value for the HARQ-ACK, and the terminal device can determine the maximum delay feedback slot offset value for the HARQ-ACK based on a fixed rule.

In embodiments of the present disclosure, when it is required to delay transmission of the HARQ-ACK, the maximum delay feedback slot offset value for the HARQ-ACK is determined based on the grouping binding size or the time window length of the SPS PDSCH. The last delay feedback slot for the HARQ-ACK is determined based on the maximum delay feedback slot offset value and the initial slot for the HARQ-ACK, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

Please referring to FIG. 11, FIG. 11 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 11, the method may include, but is not limited to, following steps.

At step 1101, an initial slot where a HARQ-ACK transmission is located is determined.

In embodiments of the present disclosure, the step 1101 may be implemented by using any one method in respective embodiments of the present disclosure. Embodiments of the present disclosure make no limitation on this and will not repeat it.

At step 1102, in a case of determining that a first PUCCH resource on the initial slot is invalid, a first configuration instruction sent by a network device is received. The first configuration instruction is configured to indicate the maximum delay feedback slot offset value.

In some embodiments, the first configuration instruction may include a first indication field for indicating the maximum delay feedback slot offset value, and the maximum delay feedback slot offset value may be determined based on the first indication field in the first configuration instruction. In some embodiments, the above first indication field may be an existing field in the first configuration instruction. For example, the above first configuration instruction may be a radio resource control (RRC) signaling, which may indicate the maximum delay feedback slot offset value by multiplexing PUCCH resource information (PRI). In other embodiments, the above first indication field may be an indication field newly configured by the first configuration instruction.

In some embodiments, the above first configuration instruction may be the RRC signaling, a downlink control information (DCI) signaling, and a media access control control element (MAC CE) signaling.

At step 1103, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 1104, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is necessary to determine the maximum delay feedback slot offset value corresponding to HARQ-ACK, the maximum delay feedback slot offset value for the HARQ-ACK is determined based on the first configuration instruction sent by the network device. Therefore, the terminal device may determine the maximum delay feedback slot offset value based on the configuration instruction of the network device.

In embodiments of the present disclosure, when it is required to delay transmission of the HARQ-ACK, the maximum delay feedback slot offset value for the HARQ-ACK is determined based on the first configuration instruction sent by the network device. The last delay feedback slot for the HARQ-ACK is determined based on the maximum delay feedback slot offset value and the initial slot for the HARQ-ACK, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

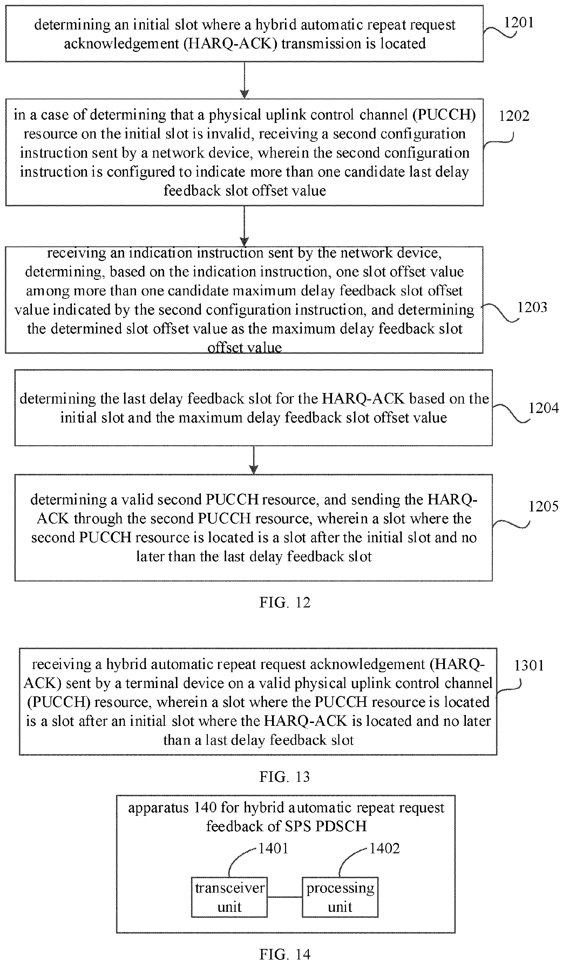

Please referring to FIG. 12, FIG. 12 is a flowchart illustrating another method for hybrid automatic repeat request feedback according to an embodiment of the present disclosure. The method may be performed by a terminal device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 12, the method may include, but is not limited to, following steps.

At step 1201, an initial slot where a HARQ-ACK transmission is located is determined.

In embodiments of the present disclosure, the step 1201 may be implemented by using any one method in respective embodiments of the present disclosure. Embodiments of the present disclosure make no limitation on this and will not repeat it.

At step 1202, in a case of determining that a first PUCCH resource on the initial slot is invalid, a second configuration instruction sent by a network device is received. The second configuration instruction is configured to indicate more than one candidate maximum delay feedback slot offset value for the HARQ-ACK.

In some embodiments, the second configuration instruction may include a second indication field for indicating the more than one candidate maximum delay feedback slot offset value for the HARQ-ACK, and the more than one candidate maximum delay feedback slot offset value for the HARQ-ACK may be determined based on the second indication field in the second configuration instruction.

In some embodiments, the above second indication field may be an existing field in the second configuration instruction. For example, the above second configuration instruction may be a radio resource control (RRC) signaling, and the more than one candidate maximum delay feedback slot offset value for the HARQ-ACK may be indicated by multiplexing PUCCH resource information (PRI). For another example, the above second configuration instruction may be the RRC signaling, and the maximum delay feedback slot offset value may be indicated by multiplexing an L field in a TDRA table.

In other embodiments, the above second indication field may be an indication field newly configured by the second configuration instruction. In other words, an indication field may be added for the second configuration instruction to indicate the more than one candidate maximum delay feedback slot offset values for the HARQ-ACK.

In some embodiments, the above second configuration instruction may be the RRC signaling, a DCI signaling, and an MAC CE signaling.

At step 1203, an indication instruction sent by the network device is received, one slot offset value among more than one candidate maximum delay feedback slot offset value indicated by the second configuration instruction is determined based on the indication instruction, and the determined slot offset value is determined as the maximum delay feedback slot offset value.

In some embodiments, in a case where the above second configuration instruction is the RRC signaling, the above indication instruction may be the DCI signaling.

In other embodiments, in a case where the above second configuration instruction is the RRC signaling, the above indication instruction may be the MAC CE signaling.

In other embodiments, in a case where the above second configuration instruction is the MAC CE signaling, the above indication instruction may be the DCI signaling.

The above indication instruction may include a third indication field a third indication field for indicating one slot offset value among the more than one candidate maximum delay feedback slot offset value being as the maximum delay feedback slot offset value. The above third indication field may be an existing field in the indication instruction, or can be an indication field newly added in the indication instruction. An embodiment of the present disclosure does not limit this.

At step 1204, the last delay feedback slot for the HARQ-ACK is determined based on the initial slot and the maximum delay feedback slot offset value.

In some embodiments, the maximum delay feedback slot offset value is based on continuous slots. The initial slot and the maximum delay feedback slot offset value may be added together, and the added value may be used as the last delay feedback slot for the HARQ-ACK.

In other embodiments, the last delay feedback slot offset is based on available slots, and the initial slot and the maximum delay feedback slot offset value cannot be directly added as the last delay feedback slot for HARQ-ACK.

At step 1205, a valid second PUCCH resource is determined, and the above HARQ-ACK is sent through the second PUCCH resource. A slot where the second PUCCH resource is located is a slot after the initial slot and no later than the last delay feedback slot.

In some embodiments, the slot where the second PUCCH resource may be a slot between the initial slot and the last delay feedback slot.

In some other embodiments, the slot where the second PUCCH resource may be the last delay feedback slot.

In embodiments of the present disclosure, when it is necessary to determine the maximum delay feedback slot offset value corresponding to the HARQ-ACK, the more than one candidate maximum delay feedback slot offset value is configured through the configuration instruction of the network device, and one slot offset value among the more than one candidate maximum delay feedback slot offset value is indicated as the maximum delay feedback slot offset value for the HARQ-ACK by the indication instruction. Therefore, the terminal device may determine the maximum delay feedback slot offset value based on the configuration instruction and the indication instruction of the network device.

In embodiments of the present disclosure, when it is required to delay transmission of the HARQ-ACK, the more than one candidate maximum delay feedback slot offset value is configured through the configuration instruction of the network device, and one slot offset value among the more than one candidate maximum delay feedback slot offset value is indicated as the maximum delay feedback slot offset value for the HARQ-ACK by the indication instruction. The last delay feedback slot for the HARQ-ACK is determined based on the maximum delay feedback slot offset value and the initial slot for the HARQ-ACK, and the HARQ-ACK is transmitted through the valid PUCCH resource on the last delay feedback slot or on the slot between the initial slot and the last delay feedback slot. Therefore, the method may ensure the transmission latency and the transmission effectiveness of the ultra reliable and low latency communication (URLLC) while supporting delayed feedback of the HARQ-ACK.

It should be noted that the above possible implementations may be executed independently or may be executed in combination. Embodiments of the present disclosure make no limitation on these.

Please referring to FIG. 13, FIG. 13 is a flowchart illustrating another method for hybrid automatic repeat request feedback according to an embodiment of the present disclosure. The method may be performed by a network device in the communication system as illustrated in FIG. 1. The method may be performed independently, or may be performed together with any one embodiment of the present disclosure or a possible implementation in an embodiment, or may be performed together with any one technical solution in the related arts.

As illustrated in FIG. 13, the method may include, but is not limited to, following steps.

At step 1301, a hybrid automatic repeat request acknowledgement (HARQ-ACK) sent by a terminal device on a valid physical uplink control channel (PUCCH) resource is received. A slot where the PUCCH resource is located is a slot after an initial slot where the HARQ-ACK is located and no later than a last delay feedback slot.

In an embodiment of the present disclosure, the network device may receive the HARQ-ACK sent by the terminal device through the PUCCH resource on the slot no later than the last delay feedback slot. Therefore, the method supports delayed transmission of the HARQ-ACK, ensuring transmission latency and transmission effectiveness of ultra reliable and low latency communication (URLLC).

On the basic of the above embodiment, the last delay feedback slot may be determined based on the initial slot and the maximum delay feedback slot offset value for the HARQ-ACK.

On the basic of the above embodiment, the network device may send a first configuration instruction to the terminal device. The first configuration instruction is configured to indicate the maximum delay feedback slot offset value.

In an embodiment, the network device may send the configuration instruction to the terminal device, so that the terminal device may determine the maximum delay feedback slot offset value for the HARQ-ACK through the configuration instruction of the network device.

The first configuration instruction may include a first indication field for indicating the maximum delay feedback slot offset value. In some embodiments, the above first indication field may be an existing indication field in the first configuration instruction, or an indication field newly added in the first configuration instruction.

In some embodiments, the above first configuration instruction may be a RRC signaling, a DCI signaling, an MAC CE signaling.

In some embodiments, the network device may send a second configuration instruction to the terminal device, and send an indication instruction to the terminal device. The second configuration instruction comprises more than one candidate maximum delay feedback slot offset value, and the indication instruction is configured to indicate one slot offset value among the more than one candidate maximum delay feedback slot offset value.

In some embodiments, the second configuration instruction may include a second indication field for indicating the more than one candidate maximum delay feedback slot offset value. The more than one candidate maximum delay feedback slot offset value for the HARQ-ACK may be determined according to the second indication field in the second configuration instruction.

In some embodiments, the above second indication field may be an existing field in the second configuration instruction. For example, the above second configuration instruction may be a radio resource control (RRC) signaling, and the more than one candidate maximum delay feedback slot offset value for the HARQ-ACK may be indicated by multiplexing PUCCH resource information (PRI). For another example, the above second configuration instruction may be the RRC signaling, and the maximum delay feedback slot offset value may be indicated by multiplexing an L field in a TDRA table.

In other embodiments, the above second indication field may be an indication field newly configured by the second configuration instruction. In other words, an indication field may be added for the second configuration instruction to indicate the more than one candidate maximum delay feedback slot offset values for the HARQ-ACK.

In some embodiments, the above second configuration instruction may be the RRC signaling, a DCI signaling, and an MAC CE signaling.

In some embodiments, in a case where the above second configuration instruction is the RRC signaling, the above indication instruction may be the DCI signaling.

In other embodiments, in a case where the above second configuration instruction is the RRC signaling, the above indication instruction may be the MAC CE signaling.

In other embodiments, in a case where the above second configuration instruction is the MAC CE signaling, the above indication instruction may be the DCI signaling.

The above indication instruction may include a third indication field a third indication field for indicating one slot offset value among the more than one candidate maximum delay feedback slot offset value being as the maximum delay feedback slot offset value. The above third indication field may be an existing field in the indication instruction, or can be an indication field newly added in the indication instruction. An embodiment of the present disclosure does not limit this.

It should be noted that the explanation of the method executed on the terminal device side in any of the embodiments shown in FIGs. 2a to 12 also applies to the method executed on the network device side in this embodiment. The implementation principle is similar and will not be repeated herein.

In embodiments provided in the present disclosure, the method proposed in the present disclosure is introduced from perspectives of the network device and the terminal device. In order to achieve functions of the method proposed in embodiments of the present disclosure, the network device and the terminal device may include hardware structures and software modules, to achieve the above functions in form of hardware structures, software modules, or a combination of hardware structures and software modules. One of the above functions can be executed in the form of hardware structures, software modules, or the combination of hardware structures and software modules.

FIG. 14 is a block diagram illustrating an apparatus 140 for hybrid automatic repeat request (HARQ) feedback according to an embodiment of the present disclosure. As illustrated in FIG. 14, the apparatus 140 for hybrid automatic repeat request (HARQ) feedback may include a transceiver unit 1401 and a processing unit 1402. The transceiver unit 1401 may include a sending unit and/or a receiving unit. The sending unit is configured to achieve a sending function, and the receiving unit is configured to achieve a receiving function. The transceiver unit 1401 may achieve the sending function and/or the receiving function.

The apparatus 140 may be a network device, an apparatus in the network device, or an apparatus that can be matched and used with the network device. Alternatively, the apparatus 140 may be a terminal device, an apparatus within the terminal device, or an apparatus that can be matched and used with the terminal device.

When the apparatus 140 is the terminal device, the transceiver unit 1401 is configured to determine an initial slot where a hybrid automatic repeat request acknowledgement (HARQ-ACK) transmission is located; determine a last delay feedback slot for the HARQ-ACK in a case of determining that a first physical uplink control channel (PUCCH) resource on the initial slot is invalid; and determine a valid second PUCCH resource and send the HARQ-ACK through the second PUCCH resource, in which, a slot where the second PUCCH resource is located is a slot after the initial slot and no later than the last delay feedback slot

In some embodiments, the processing unit 1402 is configured to determine the last delay feedback slot for the HARQ-ACK comprises at least one of: determining the last delay feedback slot for the HARQ-ACK based on a protocol agreement; determining more than one candidate last delay feedback slot for the HARQ-ACK based on a protocol agreement, and determine the last delay feedback slot from the more than one candidate last delay feedback slot; extending a time-domain resource allocation (TDRA) table based on a protocol agreement, and determining the last delay feedback slot from the TDRA table; or acquiring a last delay feedback slot corresponding to the first PUCCH resource based on a protocol agreement.

In some embodiments, the processing unit 1402 is configured to: determine a maximum delay feedback slot offset value for the HARQ-ACK; determine the last delay feedback slot for the HARQ-ACK based on the initial slot and the maximum delay feedback slot offset value.

In some embodiments, the processing unit 1402 is configured to determine determining the maximum delay feedback slot offset value for the HARQ-ACK comprises at least one of: determining the maximum delay feedback slot offset value for the HARQ-ACK based on a protocol agreement; determining more than one candidate maximum delay feedback slot offset value for the HARQ-ACK based on a protocol agreement, and determining the maximum delay feedback slot offset value from the more than one candidate maximum delay feedback slot offset value; expanding a time-domain resource allocation (TDRA) table based on a protocol agreement, and acquiring a corresponding slot offset value from the TDRA table, and determining the slot offset value as the maximum delay feedback slot offset value; or acquiring a slot offset value corresponding to the first PUCCH resource based on a protocol agreement, and determining the slot offset value as the maximum delay feedback slot offset value.

In some embodiments, the processing unit 1402 is configured to acquire a maximum K1 value among more than one initial slot K1 configured for the HARQ-ACK; and determine the maximum delay feedback slot offset value based on the maximum K1 value.

In some embodiments, the processing unit 1402 is configured to determine the maximum K1 value as the maximum delay feedback slot offset value; or perform an operation on the maximum K1 value according to a preset operation rule, and determine a value obtained from the operation as the maximum delay feedback slot offset value.

In some embodiments, the processing unit 1402 is configured to determine a maximum number of delayable times for the initial slot; and determine the maximum delay feedback slot offset value based on the maximum number of delayable times.

In some embodiments, the processing unit 1402 is configured to determine the maximum delay feedback slot offset value for the HARQ-ACK based on a transmission cycle of a semi-persistent scheduling (SPS) physical downlink shared channel (PDSCH); or determine the maximum delay feedback slot offset value for the HARQ-ACK based on a grouping binding size or a time window length of the SPS PDSCH.

In some embodiments, the transceiver unit 1401 is configured to receive a first configuration instruction sent by a network device, in which the first configuration instruction is configured to indicate the maximum delay feedback slot offset value; or receive a second configuration instruction sent by a network device, and receive an indication instruction sent by the network device, determine, based on the indication instruction, one slot offset value among more than one candidate maximum delay feedback slot offset value indicated by the second configuration instruction, and determine the determined slot offset value as the maximum delay feedback slot offset value.

In some embodiments, the first configuration instruction includes a first indication field for indicating the maximum delay feedback slot offset value; or, the second configuration instruction includes a second indication field for indicating the more than one candidate maximum delay feedback slot offset value, and the indication instruction includes a third indication field for indicating one slot offset value among the more than one candidate maximum delay feedback slot offset value being as the maximum delay feedback slot offset value.

It should be noted that the explanation of the method executed on the terminal device side in any of the embodiments shown in FIG. s 2a to 12 also applies to the apparatus 140 for hybrid automatic repeat request (HARQ) feedback in this embodiment. The implementation principle is similar and will not be repeated herein.

When the apparatus 140 is the network device, the transceiver unit 1401 is configured to receive a hybrid automatic repeat request acknowledgement (HARQ-ACK) sent by a terminal device on a valid physical uplink control channel (PUCCH) resource, in which, a slot where the PUCCH resource is located is a slot after an initial slot where the HARQ-ACK is located and no later than a last delay feedback slot.

In some embodiments, the last delay feedback slot is determined based on the initial slot and the maximum delay feedback slot offset value for the HARQ-ACK.

In some embodiments, he transceiver unit 1401 is configured to send a first configuration instruction to the terminal device, in which, the first configuration instruction is configured to indicate the maximum delay feedback slot offset value; or send a second configuration instruction to the terminal device, and send an indication instruction to the terminal device, in which the second configuration instruction comprises more than one candidate maximum delay feedback slot offset value, the indication instruction is configured to indicate one slot offset value among the more than one candidate maximum delay feedback slot offset value.

In some embodiments, the first configuration instruction includes a first indication field for indicating the maximum delay feedback slot offset value; or, the second configuration instruction includes a second indication field for indicating the more than one candidate maximum delay feedback slot offset value, and the indication instruction includes a third indication field for indicating one slot offset value among the more than one candidate maximum delay feedback slot offset value being as the maximum delay feedback slot offset value.

It should be noted that the explanation of the method executed on the network device side in any of the embodiments shown in FIG. 13 also applies to the apparatus 140 for hybrid automatic repeat request (HARQ) feedback in this embodiment. The implementation principle is similar and will not be repeated herein.

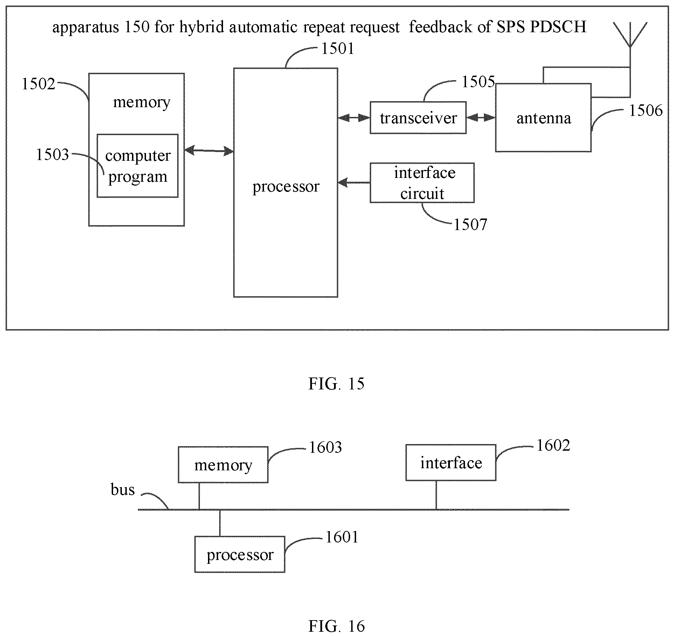

FIG. 15 is a block diagram illustrating an apparatus for hybrid automatic repeat request (HARQ) feedback provided in another embodiment of the present disclosure. The apparatus 150 for hybrid automatic repeat request (HARQ) feedback may be a terminal device, or a chip, a chip system, or a processor that supports a network device to implement the above method, or a chip, a chip system, or a processor that supports the terminal device to implement the above method. This device may be configured to implement the method as described in the above method embodiments, the details of which may refer to illustration of the above method embodiments.

The apparatus 150 may include one or more processors 1501. The processor 1501 may be a general-purpose processor, a dedicated processor, or the like. For example, the processor 1501 may be a baseband processor or a central processing unit. The baseband processor may be configured to process a communication protocol and communication data, while the central processor may be configured to control the communication devices (such as a base station, a baseband chip, a terminal device, a terminal chip, a DU or a CU, etc.), execute a computer program, and process data from computer program.

Optionally, the apparatus 150 may further include one or more memories 1502, each with a computer program 1503 stored thereon. The processor 1501 may execute the computer program 1503 to enable the apparatus 150 to execute the method as described in the above method embodiments. The computer program 1503 may be embedded in the processor 1501, in which case the processor 1501 may be implemented by hardware.

Optionally, the memory 1502 may further store data. The apparatus 150 and the memory 1502 may be set separately or integrated together.

Optionally, the apparatus 150 may further include a transceiver 1505 and an antenna 1506. The transceiver 1505 may be referred to as a transceiver unit, transceiver, or transceiver circuit, etc., configured to achieve a transceiver function. The transceiver 1505 may include a receiver and a transmitter, and the receiver may be referred to as a receiver or a reception circuit, etc., configured to achieve a reception function; the transmitters may be referred to as a transmitter or a transmission circuit, etc., configured to achieve a transmission function.

Optionally, the apparatus 150 may also include one or more interface circuits 1507. The interface circuit 1507 is configured to receive code instructions and transmit the code instructions to the processor 1501. The processor 1501 runs the code instructions causing the apparatus 150 to execute the method as described in the above method embodiment.

The apparatus 150 is a terminal device. The transceiver 1505 is configured to perform steps 201 to 202 in FIG. 2a; perform steps 201, 202a, and 202b in FIG. 2b; perform steps 301 to 303 in FIG. 3; perform steps 401 to 403 in FIG. 4; perform steps 501 to 503 in FIG. 5; perform steps 601 to 603 in FIG. 6; perform steps 701 to 704 in FIG. 7: perform steps 801 to 804 in FIG. 8; perform steps 901 to 903 in FIG. 9; perform steps 1001 to 1003 in FIG. 10; perform steps 1101 to 1103 in FIG. 11; perform steps 1201 to 1204 in FIG. 12. The transceiver 1505 is configured to perform step 203 in FIGs. 2a and 2b; perform step 304 in FIG. 3; perform step 404 in FIG. 4; perform step 504 in FIG. 5; perform step 604 in FIG. 6; perform step 705 in FIG. 7; perform step 805 in FIG. 8; perform step 904 in FIG. 9; perform step 1004 in FIG. 10; perform step 1104 in FIG. 11; perform step 1205 in FIG. 12.

The apparatus 150 is a terminal device. The transceiver 1505 is configured to perform step 1301 in FIG. 13.

It should be noted that the explanation of the method executed on the network device side in any of the embodiments shown in FIGs. 2a to 13 also applies to the apparatus 150 for hybrid automatic repeat request (HARQ) feedback in this embodiment. The implementation principle is similar and will not be repeated herein.

In an implementation, processor 1501 may include a transceiver for implementing reception and transmission functions. For example, the transceiver may be a transceiver circuit, an interface, or an interface circuit. The transceiver circuit, the interface, or the interface circuit for achieving the reception and transmission functions may be separate or integrated together. The above-mentioned transceiver circuit, interface or interface circuit may be configured for reading and writing codes/data, or the aforementioned transceiver circuit, interface or interface circuit may be configured for transmitting or transferring of signals.

In an implementation, the apparatus 150 may include a circuit that may achieve functions of sending, receiving, or communicating in the aforementioned method embodiments. The processor and the transceiver described in the present disclosure may be implemented on an integrated circuit (IC), an analog IC, a radio frequency integrated circuit (RFIC), a mixed signal IC, an application specific integrated circuits (ASIC), a printed circuit boards (PCB), an electronic device, and the like. The processor and the transceiver may also be manufactured using various IC process technologies, such as complementary metal oxide semiconductor (CMOS), N-type metal oxide semiconductor (NMOS), P-type metal oxide semiconductor (PMOS), bipolar junction transistor (BJT), bipolar CMOS (BiCMOS), silicon germanium (SiGe), gallium arsenide (GaAs), etc.

The apparatus for hybrid automatic repeat request (HARQ) feedback described in the above embodiments may be a network device or a terminal device (such as the first terminal device in the aforementioned method embodiment), but the scope of the apparatus for hybrid automatic repeat request (HARQ) feedback described in the present disclosure is not limited to this, and the structure of the apparatus for hybrid automatic repeat request (HARQ) feedback may not be limited by FIG. 15. The apparatus for hybrid automatic repeat request (HARQ) feedback can be an independent device or can be part of a larger device. For example, the apparatus for hybrid automatic repeat request (HARQ) feedback may be:
(1) an independent integrated circuit IC, or a chip, or a chip system or subsystem;
(2) a set of one or more ICs, optionally including a storage element for storing data and the computer program;
(3) an ASIC, such as a modem;
(4) modules that can be embedded in other devices;
(5) a receiver, a terminal, a smart terminal, a cellular phone, a wireless device, a handheld device, a mobile unit, an on-board device, a network device, a cloud device, an artificial intelligence device, etc.;
(6) others and the like.

For a case that the apparatus for hybrid automatic repeat request (HARQ) feedback is the chip or the chip system, please refer to a schematic diagram of a structure of the chip shown in FIG. 12. The chip shown in FIG. 16 includes a processor 1601 and an interface 1602. A number of processors 1601 may be one or more, and a number of interfaces 1602 may be multiple.

For a case where the chip is configured to implement functions of the terminal device in embodiments of the present disclosure:
the interface 1602 is configured to receive code instructions and transmit the code instructions to the processor;
the processor 1601 is configured to run the code instructions to execute methods as shown in FIGs. 2a to 12.

For a case where the chip is configured to implement functions of the network device in embodiments of the present disclosure:
the interface 1602 is configured to receive code instructions and transmit the code instructions to the processor;
the processor 1601 is configured to run the code instructions to execute methods as shown in FIG. 13.

Optionally, the chip may further include a memory 1603, configured to store a necessary computer program and data.

It should be noted that the explanation of the method executed on the network device side in any of the embodiments shown in FIGs. 2a to 13 also applies to the chip in this embodiment. The implementation principle is similar and will not be repeated herein.

Those skilled in the art may also understand that various illustrative logical blocks and steps listed in embodiments of the present disclosure can be implemented through electronic hardware, computer software, or a combination thereof. Whether such functions are implemented through hardware or software depends on a specific application and design requirements of an overall system. Those skilled in the art may use various methods to implement functions for each specific application, but such implementation should not be understood as beyond the scope of protection of embodiments of the present disclosure.

The present disclosed embodiment also provides a communication system, which includes an apparatus for hybrid automatic repeat request (HARQ) feedback as a terminal device as described the aforementioned embodiment of FIG. 14 and an apparatus for hybrid automatic repeat request (HARQ) feedback as a network device, or an apparatus for hybrid automatic repeat request (HARQ) feedback as a terminal device as described the aforementioned embodiment of FIG. 15 and an apparatus for hybrid automatic repeat request (HARQ) feedback as a network device.

The present disclosure also provides a computer-readable storage medium with instructions stored thereon; the instructions is configured to implement functions of any of the above method embodiments when executed by a computer.

The present disclosure also provides a computer program product, configured to implement functions of any of the above method embodiments when executed by a computer.

All or part of the above embodiments can be implemented through software, hardware, firmware, or any combination thereof. When implemented using the software, all or part of the above embodiments can be implemented in the form of computer program product. The computer program product includes one or more computer programs. When loading and executing the computer programs on a computer, the computer programs may be generated all or part of processes or functions according to embodiments of the present disclosure. The computer can be a general-purpose computer, a specialized computer, a computer network, or other programmable devices. The computer programs can be stored on a computer-readable storage media or transmitted from one computer readable storage medium to another, for example, the computer programs can be transmitted from a website site, a computer, a server or a data center to another website site, computer, server, or data center through wired (such as coaxial cable, fiber optic, digital subscriber line (DSL)) or wireless (such as infrared, wireless, microwave, etc.) methods. The computer-readable storage medium can be any available medium that a computer can access, or a data storage device such as a server including one or more available media integrations or a data center. The available media can be a magnetic media (such as a floppy disk, a hard drive, a magnetic tape), an optical media (such as a high-density digital video disc (DVD)), or a semiconductor media (such as a solid state disk (SSD)), etc.

Those ordinary skilled in the art may understand that first, second, and other numerical numbers involved in the disclosure are distinguished only for convenience of description, and are not intended to limit the scope of embodiments of the present disclosure, nor indicate an order.

At least one in this disclosure can also be described as one or more, and a plurality can be two, three, four, or more, without limitation in this disclosure. In embodiments of the present disclosure, for one type of technical feature, technical features in the type of technical feature are distinguished by "first", "second", "third", "A", "B", "C", and "D". The technical features described by "first", "second", "third", "A", "B", "C", and "D" are without any order or sequence.

Correspondences shown in respective tables in the present disclosure can be configured or predefined. The values of information in each table are only examples and can be configured as other values, which will not be limited in the present disclosure. When configuring the correspondence between information and various parameters, it is not necessary to configure all the correspondence shown in each table. For example, in the table in the present disclosure, the correspondences shown in certain rows may not be configured. For example, an appropriate deformation adjustment can be made based on the above table, such as splitting, merging, etc. Names of parameters shown in a title of the above table can also use other names that can be understood by the communication device, and the values or representations of the parameters can also use other values or representations that can be understood by the communication device. When implementing the above tables, other data structures can also be used, such as an array, a queue, a container, a stack, a linear table, a pointer, a linked list, a tree, a graph, a structure, a class, a heap, a hash table, or a hash table.

The term predetermined in this disclosure can be understood as defined, predefined, stored, pre-stored, pre-negotiated, preconfigured, cured, or pre-fired.

Those ordinary skilled in the art can realize that a unit and an algorithm step of each example described in combination with embodiments in the present disclosure can be implemented in electronic hardware, or a combination of computer software and the electronic hardware. Whether such functions are executed in hardware or software depends on specific applications and design constraints of the technical solution. Those skilled may use different methods to implement the described functions for each specific application, but such implementation should not be considered beyond the scope of this disclosure.

Those skilled in the art can clearly understand that for convenience and conciseness of description, specific working processes of the system, device, and unit described above can refer to the corresponding processes in the aforementioned method embodiments, and will not be repeated here.

The above description is only a specific implementation of the disclosure, but the scope of protection of the disclosure is not limited to this. Any changes or replacements that can easily be imagined by any skilled person familiar with the technical field within the scope of the disclosure should be covered within the scope of protection of the disclosure. Therefore, the scope of protection of the disclosure should be based on the scope of protection of claims.

## Claims

1. A method for hybrid automatic repeat request (HARQ) feedback, performed by a terminal device, comprising:
determining an initial slot where a hybrid automatic repeat request acknowledgement (HARQ-ACK) transmission is located;
determining a last delay feedback slot for the HARQ-ACK in a case of determining that a first physical uplink control channel (PUCCH) resource on the initial slot is invalid; and
sending the HARQ-ACK by determining a valid second PUCCH resource, wherein a slot where the second PUCCH resource is located is a slot after the initial slot and no later than the last delay feedback slot.

2. The method according to claim 1, wherein determining the last delay feedback slot for the HARQ-ACK comprises at least one of:
determining the last delay feedback slot for the HARQ-ACK based on a protocol agreement;
determining more than one candidate last delay feedback slot for the HARQ-ACK based on a protocol agreement, and determine the last delay feedback slot from the more than one candidate last delay feedback slot;
extending a time-domain resource allocation (TDRA) table based on a protocol agreement, and determining the last delay feedback slot from the TDRA table; or
acquiring a last delay feedback slot corresponding to the first PUCCH resource based on a protocol agreement.

3. The method according to claim 1, wherein determining the last delay feedback slot for the HARQ-ACK comprises:
determining a maximum delay feedback slot offset value for the HARQ-ACK; determining the last delay feedback slot for the HARQ-ACK based on the initial slot and the maximum delay feedback slot offset value.

4. The method according to claim 3, wherein determining the maximum delay feedback slot offset value for the HARQ-ACK comprises at least one of:
determining the maximum delay feedback slot offset value for the HARQ-ACK based on a protocol agreement;
determining more than one candidate maximum delay feedback slot offset value for the HARQ-ACK based on a protocol agreement, and determining the maximum delay feedback slot offset value from the more than one candidate maximum delay feedback slot offset value;
expanding a time-domain resource allocation (TDRA) table based on a protocol agreement, and acquiring a corresponding slot offset value from the TDRA table, and determining the slot offset value as the maximum delay feedback slot offset value; or
acquiring a slot offset value corresponding to the first PUCCH resource based on a protocol agreement, and determining the slot offset value as the maximum delay feedback slot offset value.

5. The method according to claim 3, wherein determining the maximum delay feedback slot offset value for the HARQ-ACK comprises:
acquiring a maximum K1 value among more than one initial slot K1 configured for the HARQ-ACK; and
determining the maximum delay feedback slot offset value based on the maximum K1 value.

6. The method according to claim 5, wherein determining the maximum delay feedback slot offset value based on the maximum K1 value comprises:
determining the maximum K1 value as the maximum delay feedback slot offset value; or
performing an operation on the maximum K1 value according to a preset operation rule, and determining a value obtained from the operation as the maximum delay feedback slot offset value.

7. The method according to claim 3, wherein determining the maximum delay feedback slot offset value for the HARQ-ACK comprises:
determining a maximum number of delayable times for the initial slot; and
determining the maximum delay feedback slot offset value based on the maximum number of delayable times.

8. The method according to claim 3, wherein determining the maximum delay feedback slot offset value for the HARQ-ACK comprises:
determining the maximum delay feedback slot offset value for the HARQ-ACK based on a transmission cycle of a semi-persistent scheduling (SPS) physical downlink shared channel (PDSCH); or
determining the maximum delay feedback slot offset value for the HARQ-ACK based on a grouping binding size or a time window length of the SPS PDSCH.

9. The method according to claim 3, wherein determining the maximum delay feedback slot offset value for the HARQ-ACK comprises:
receiving a first configuration instruction sent by a network device, wherein the first configuration instruction is configured to indicate the maximum delay feedback slot offset value; or
receiving a second configuration instruction sent by a network device, and receiving an indication instruction sent by the network device, determining, based on the indication instruction, one slot offset value among more than one candidate maximum delay feedback slot offset value indicated by the second configuration instruction, and determining the determined slot offset value as the maximum delay feedback slot offset value.

10. The method according to claim 8, wherein the first configuration instruction comprises a first indication field for indicating the maximum delay feedback slot offset value;
or, the second configuration instruction comprises a second indication field for indicating the more than one candidate maximum delay feedback slot offset value, and the indication instruction comprises a third indication field for indicating one slot offset value among the more than one candidate maximum delay feedback slot offset value being as the maximum delay feedback slot offset value.

11. A method for hybrid automatic repeat request (HARQ) feedback, performed by a network device, comprising:
receiving a hybrid automatic repeat request acknowledgement (HARQ-ACK) sent by a terminal device on a valid physical uplink control channel (PUCCH) resource, wherein a slot where the PUCCH resource is located is a slot after an initial slot where the HARQ-ACK is located and no later than a last delay feedback slot.

12. The method according to claim 11, wherein the last delay feedback slot is determined based on the initial slot and the maximum delay feedback slot offset value for the HARQ-ACK.

13. The method according to claim 12, further comprising:
sending a first configuration instruction to the terminal device, wherein the first configuration instruction is configured to indicate the maximum delay feedback slot offset value; or
sending a second configuration instruction to the terminal device, and sending an indication instruction to the terminal device, wherein the second configuration instruction comprises more than one candidate maximum delay feedback slot offset value, the indication instruction is configured to indicate one slot offset value among the more than one candidate maximum delay feedback slot offset value.

14. The method according to claim 13, wherein the first configuration instruction comprises a first indication field for indicating the maximum delay feedback slot offset value;
or, the second configuration instruction comprises a second indication field for indicating the more than one candidate maximum delay feedback slot offset value, and the indication instruction comprises a third indication field for indicating one slot offset value among the more than one candidate maximum delay feedback slot offset value being as the maximum delay feedback slot offset value.

15. An apparatus for hybrid automatic repeat request (HARQ) feedback, performed by a terminal device, comprising:
a processing unit, configured to, determine an initial slot where a hybrid automatic repeat request acknowledgement (HARQ-ACK) transmission is located; and determine a last delay feedback slot for the HARQ-ACK in a case of determining that a first physical uplink control channel (PUCCH) resource on the initial slot is invalid;
a transceiver unit, configured to determine a valid second PUCCH resource, and send the HARQ-ACK through the second PUCCH resource, wherein a slot where the second PUCCH resource is located is a slot after the initial slot and no later than the last delay feedback slot.

16. An apparatus for hybrid automatic repeat request (HARQ) feedback, performed by a network device, comprising:
a transceiver unit, configured to receive a hybrid automatic repeat request acknowledgement (HARQ-ACK) sent by a terminal device on a valid physical uplink control channel (PUCCH) resource, wherein a slot where the PUCCH resource is located is a slot after an initial slot where the HARQ-ACK is located and no later than a last delay feedback slot.

17. An apparatus for hybrid automatic repeat request (HARQ) feedback, comprising a processor and a memory having a computer program stored thereon, wherein when the computer program is executed by the processor, the method according to any one of claims 1 to 10 or the method according to any one of claims 11 to 14 is implemented.

18. An apparatus for hybrid automatic repeat request (HARQ) feedback, comprising a processor and an interface circuit, wherein,
the interface circuit is configured to receive code instructions and transmit the code instructions to the processor;
the processor is configured to run the code instructions to execute the method according to any one of claims 1 to 10, or the processor is configured to run the code instructions to execute the method according to any one of claims 11 to 14.

19. A computer-readable storage medium having instructions stored thereon, wherein when the instructions are executed, the method according to any one of claims 1 to 10 or the method according to any one of claims 11 to 14 is implemented.
